# EUROPEAN PATENT SPECIFICATION

(11) **EP 4 010 750 B1**
(45) Date of publication and mention of the grant of the patent: **26.02.2025**
(21) Application number: 20834072.9
(22) Date of filing: 08.12.2020
(51) Int. Cl.: G02B 27/01, G02B 27/28

(54) **NEAR-EYE OPTICAL SYSTEM IMPLEMENTING A WAVEGUIDE WITH AN OUTPUT VIEWER ELEMENT HAVING A REFRACTIVE BEAM-SPLITTING CONVEX LENS**
AUGENNAHES OPTISCHES SYSTEM MIT EINEM WELLENLEITER MIT EINEM AUSGANGSSICHTVORRICHTUNGSELEMENT MIT EINER KONVEXEN LINSE MIT REFRAKTIVER STRAHLENTEILUNG
SYSTÈME OPTIQUE PROCHE DE L'OEIL METTANT EN OEUVRE UN GUIDE D'ONDES AVEC UN ÉLÉMENT DE VISUALISATION DE SORTIE AYANT UNE LENTILLE CONVEXE DE DIVISION DE FAISCEAU DE RÉFRACTION

(30) Priority: 13.12.2019 US 201962947657 P
(43) Date of publication of application: 15.06.2022
(73) Proprietor: Google LLC, Mountain View, CA 94043 (US)
(72) Inventor: QIN, Yi, Mountain View, California 94043 (US); BIERHUIZEN, Serge Joel Armand, Mountain View, California 94043 (US); BRINKLEY, Patrick F., Mountain View, California 94043 (US); MARTINEZ, Oscar Alberto, Mountain View, California 94043 (US); CAROLLO, Jerome, Mountain View, California 94043 (US)
(74) Representative: Maikowski & Ninnemann Patentanwälte Partnerschaft mbB
(86) International application number: PCT/US2020/063827
(87) International publication number: WO 2021/119021

(56) References cited:
- WO-A2-2018/211405
- WO-A2-2018/211405
- CN-A- 105 629 478
- CN-A- 105 629 478
- US-B1- 10 495 798
- US-B1- 10 495 798

## Description

### BACKGROUND

Near-eye augmented reality (AR) display systems typically employ an optical combiner waveguide (also frequently referred to as a "lightguide") to convey display light emitted by a display to a user's eye while also permitting light from the real-world scene to pass through the waveguide to the user's eye, resulting in the imagery represented by the display light overlaying the real-world scene from the perspective of the user. Typically, the waveguide relies on total internal reflection (TIR) to convey light received from the display via incoupling optics at one end of the waveguide to outcoupling optics facing the user's eye on the other end of the waveguide. Conventional waveguide architectures, including diffractive waveguide architectures, geometric waveguide architectures, and freeform waveguide architectures, often are costly and complex to manufacture and typically have relatively low optical efficiencies (e.g., often around only 1%).

An optical combiner comprising a waveguide and an outcoupling interface that folds a beam path is known from US 10 495 798 B1.

Further details of polarization based beam folding lenses are known from WO 2018/211405 A2.

The invention is defined in the independent claims. Further aspects of the invention are defined in the dependent claims.

### DETAILED DESCRIPTION

The following describes example implementations of an optical combiner for use in a near-eye display system. The optical combiner uses a waveguide to convey light representative of display images from a micro-display or other display to a wearer's eye, and this conveyed display light can be combined at the optical combiner with scene light from the real-world scene of the near-eye display system to present combined display/scene imagery to a user. In at least one embodiment, the waveguide uses total internal reflection (TIR) to convey the display light from an incoupling interface facing the micro-display to an outcoupling interface that projects the combined display and scene light toward an expected position of the user's eye via an outcoupling interface. The outcoupling interface comprises a transparent pancake optic disposed between the proximal side of the waveguide and the expected position of the user's eye. This pancake lens employs a series of polarization-dependent layers, including a refractive beam-splitting convex lens, to fold the light path and reduce the dimensions of the near-eye optical system implementing the optical combiner. The refractive beam-splitting convex lens can be implemented as a plano-convex lens having one planar surface and an opposing convex surface or a bi-convex lens having two opposed convex surfaces.

Embodiments of the optical system including the refractive beam splitting convex lens typically produce lower optical aberration than conventional optical systems, which allows the user to resolve smaller display pixels and supports a larger eye box. The optical system also produces lower levels of spherical and chromatic aberration, astigmatism, and coma, and thus requires less computational effort to pre-process the display imagery to correct for such aberrations. The refractive portion of the refractive beam splitting convex lens balances the field curvature of the reflective portion, thereby reducing the overall field curvature produced by the optical system. Furthermore, the additional refractive power of the refractive beam splitting convex lens can be varied to enhance, optimize, or tune the optical performance of the optical system. As such, the outcoupling interface can be configured to provide any desired optical power, which in turn permits the use of a flat waveguide that provides no optical power, as well as providing for a large eye box due to the optical magnification occurring closer to the eye. Further, to mitigate world-side light leakage of reflected display light as a result of the optical path folding by the output interface, in at least some embodiment, the refractive beam-splitting convex lens is implemented using a light-absorbing material disposed on a world-facing side so as to provide an array or other pattern of partial mirrors, and thus provide for substantial absorption of light incident on the world-facing side of the lens, and thus reducing the amount of leaked display light.

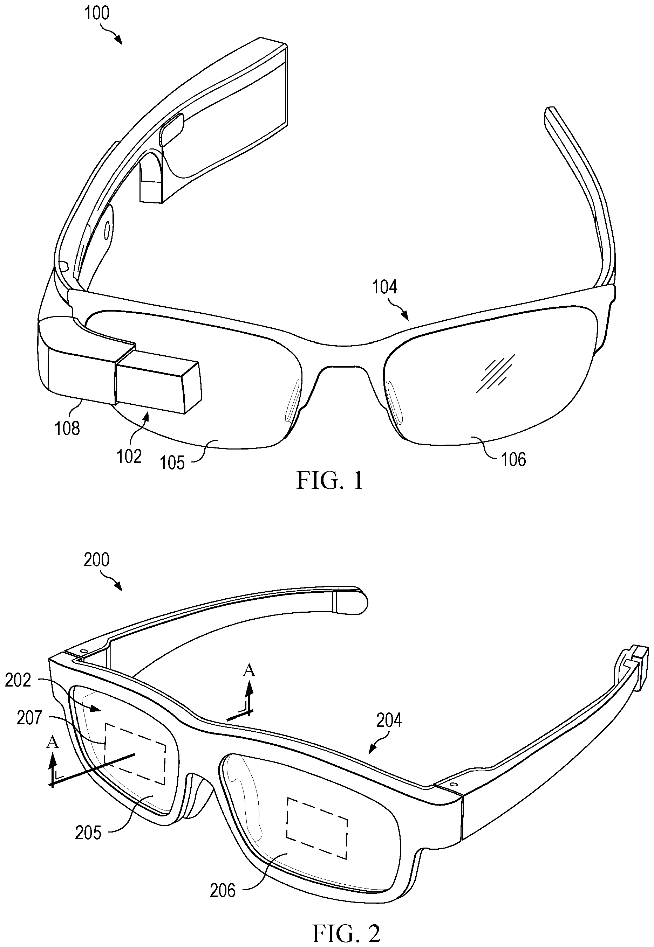

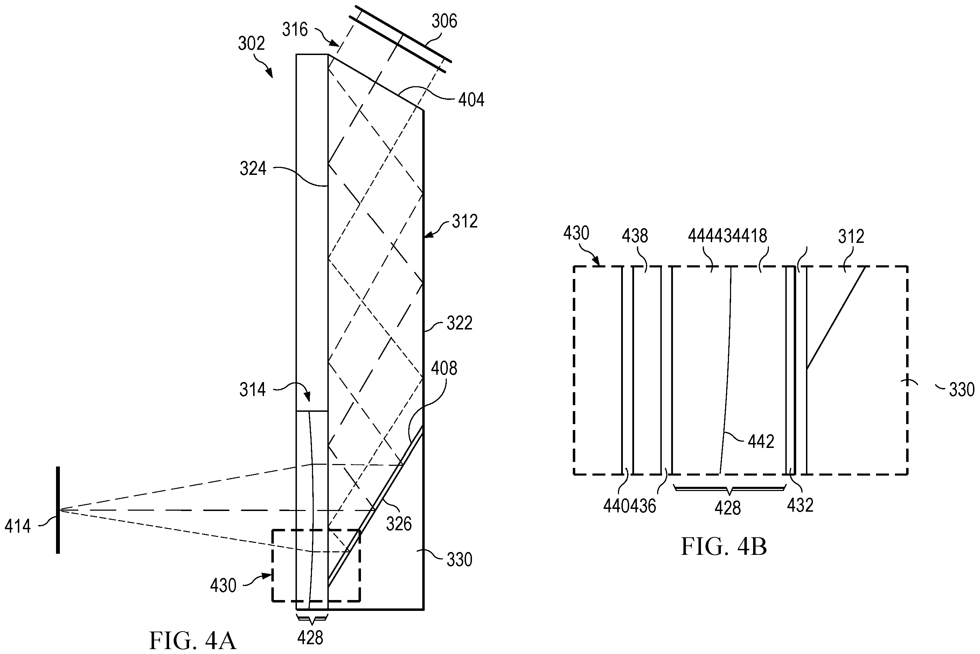

FIG. 1 illustrates an example near-eye display system 100 employing an optical combiner 102 in accordance with at least one embodiment. The system 100 is implemented in an eyeglass form factor having an eyeglass frame 104 with eyeglass lenses 105, 106 for a wearer's right eye and left eye, respectively. In the depicted embodiment, the optical combiner 102 is separate from the eyeglass lenses and instead overlies one of the eyeglass lenses (eyeglass lens 105 in this instance) such that an out-coupling interface (described in greater detail below with reference to FIGs. 4-9) of the optical combiner 102 faces the expected position of the corresponding eye of the wearer. The optical combiner 102 is mounted to the eyeglass frame 104 via a waveguide mount housing 108, which also serves to house some or all of the electronic components (not illustrated in FIG. 1) of the near-eye display system 100, such as a display that generates augmented reality (AR) or (VR) imagery for display to the wearer via the optical combiner 102, an incoupling optic to direct light from the display to an incoupling interface of the optical combiner 102, one or more processors, wireless interfaces, batteries or other power sources, and the like. A number of these components are described in greater detail below.

FIG. 2 illustrates another example near-eye display system 200 employing an optical combiner 202 in accordance with at least one embodiment. As with the system 100 of FIG. 1, the system 200 employs an eyeglass form factor with an eyeglass frame 204 having eyeglass lenses 205, 206. However, in contrast with the system 100, the system 200 implements the optical combiner 202 using the eyeglass lens 205. That is, the optical combiner 202 is integrated within the eyeglass lens 205, and thus allowing the near-eye display system 200 to have a more traditional eyeglass appearance. In this implementation, a display housing (omitted from FIG. 2 for clarity of illustration) on, or within, the eyeglass frame 204 at the distal periphery of the eyeglass lens 205 contains a micro-display or other display to emit display light representative of AR or VR imagery and incoupling optic to direct the emitted display light to an incoupling interface of the optical combiner 202 in the lens 205, whereupon the display light is propagated through the optical combiner 202/eyeglass lens 205 toward an outcoupling interface 207 that is located in the eyeglass lens 205/optical combiner 202 so as to be aligned with an expected position (or expected range of positions) of a corresponding eye of the wearer. In some embodiments, the eyeglass lens 206 likewise implements a corresponding optical combiner and outcoupling interface, and the system 200 employs corresponding display componentry in the same manner to provide for the display of AR or VR imagery to the other eye of the wearer as well.

The optical combiner 102 of system 100 of FIG. 1 and the optical combiner 202 of system 200 of FIG. 2 each operates to convey display light from a display to an eye of the user via one or more instances of total internal reflection (TIR) of the display light within the body of a waveguide of the optical combiner as the display light traverses from one end of the waveguide proximate to the display to the opposing end of the waveguide facing an eye of the wearer. The conveyed display light is then combined with scene light from the world-facing side of the waveguide for viewing by a user as a combination of the rendered or captured imagery represented by the display light and the real-world scene, or environment, viewed by the user through the lens of the system.

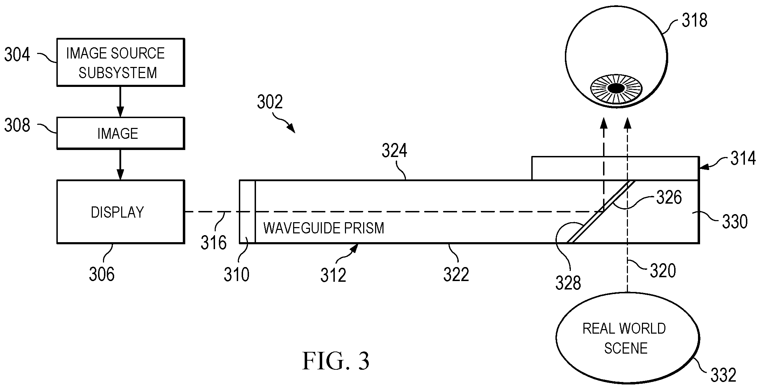

FIG. 3 illustrates a near-eye display system 300 in diagrammatic form, with the near-eye display system 300 representing, for example, either of the near-eye display systems 100 and 200 of FIGs. 1 and 2, respectively. The near-eye display system 300 includes an optical combiner 302, an image source subsystem 304, and a display panel 306. The display panel 306 can include, for example, a micro-display (e.g., a display typically measuring under 5 cm diagonally, and in many cases, under 2.5 cm diagonally). Examples of the display panel 306 can include, for example, a liquid crystal display (LCD) panel, a light-emitting diode (LED) display, an organic LED (OLED) panel, a liquid crystal on silicon (LCoS) display, and the like. The image source subsystem 304 includes a computing system having one or more graphics processing units (GPUs) or other processors that operate to provide a sequence of display images 308 for display at the display panel 306. Each display image 308 can represent any of a variety of visual content, such as symbols (e.g., navigational directional arrows), icons, text, captured or rendered imagery, video, and the like.

The optical combiner 302 includes an incoupling interface 310, a waveguide prism 312, and an outcoupling interface 314. Display light 316 emitted by the display panel 306 when displaying the display image 308 is transmitted into the waveguide prism 312 via the incoupling interface 310, whereupon the display light 316 is transmitted along the waveguide prism 312 via one or more TIRs to an outcoupling surface 326 that directs the display light 316 to the outcoupling interface 314. In an embodiment, a linear polarizing (LP) layer 328 is disposed at the outcoupling surface 326 of the waveguide prism. The outcoupling interface 314 is a pancake optic with a plurality of polarization-dependent layers, and thus, through manipulation of the polarization state of the display light 316 via various polarization-dependent layers of the incoupling interface 310, the waveguide prism 312, and the outcoupling interface 314, the optical path of the display light 316 is "folded" as it passes through the outcoupling interface 314 toward a viewer's eye 318, thereby permitting a longer effective focal length relative to the thickness of the incoupling interface 310.

Moreover, as described herein, in at least one embodiment, the outcoupling interface 314 includes a refractive beam-splitting convex lens (e.g., a convex partial mirror)(not shown in FIG. 3) that serves both as a folding element to fold the optical path of the display light 316, as well as a focusing element to introduce an optical power into the display light 316 as it traverses the outcoupling interface 314. Concurrently, scene light 320 from a real-world scene 332 and incident on the world-facing side 322 of the waveguide prism 312 is transmitted through the waveguide prism 312 to the eye-facing side 324 and then through the outcoupling interface 314 toward the eye 318. In some embodiments, because the scene light 320 does not have the particular polarity state that the waveguide prism 312 imparts on the display light 316, the scene light 320 is not magnified, nor is its optical path extended via folding by the outcoupling interface 314 as it passes through the optical combiner 302 and thus, reaches the user's eye 318 relatively unaltered. That is, the scene light 320 experiences little to no distortion as it passes through the optical combiner 302.

FIG. 4 illustrates a cross-section view of an implementation of the optical combiner 302 according to the claimed invention at, for example, line A-A of the optical combiner 202 of FIG. 2. In the illustrated embodiment, display light 316 emitted by a display 306 is directed to incoupling interface 310 positioned at a distal end of waveguide prism 312, wherein the incoupling interface 310 has disposed therein an LP layer 404 that serves to polarize the incoming display light 316 to a particular linear polarization state (e.g., a s-polarized state). The display light 316 is then conveyed to a proximal end of the waveguide prism 312 via three (or more) total internal reflections, such as the three TIRs illustrated in FIG. 4. The outcoupling surface 326 of waveguide prism 312 is oriented at a non-zero angle relative to the world-facing surface 322 and the parallel eye-facing surface 324 of the waveguide prism 312 so as to reflect the display light 316 out of the waveguide prism 312 toward the outcoupling interface 314 disposed parallel to the eye-facing surface 324 at the proximal end of the waveguide prism 312. In at least one embodiment, a polarized beam splitter (PBS) layer 408 is disposed at the outcoupling surface 326. In an embodiment, the optical combiner 302 further includes a compensation prism 330 having a substantially similar index of refraction as the material of the waveguide prism 312 so that the optical combiner 302 effectively operates as a transparent "window" through which a user can view the real-world scene, thus facilitating the transmittance of scene light from the world-facing side 322 to a pupil 414 of a user's eye without introduction of aberrations, magnification, or other optical effects on the scene light.

As illustrated by expanded view 430, the outcoupling interface 314 includes a pancake lens or similar optical element separated from the eye-facing surface 324 of the waveguide prism 312 via an air gap 418 or a low-index coating/adhesive. The outcoupling interface 314 has a plurality of layers or stages of polarization-dependent films or structures that operate to both fold the optical path of the light incident on the world-facing side of the outcoupling interface 314, as well as to provide optical power to the display light 316 while imparting little or no optical power to the real-world scene light transmitted through the waveguide prism 312 and compensation prism 330. In some embodiments, these layers include a first quarter-wave plate (QWP) layer 432 disposed opposite the air gap 418 from the eye-facing side 324 of the waveguide prism 312, a refractive beam-splitting convex lens 428 implemented as, for example, a convex partially reflective mirror (e.g., a 50/50 mirror, an 80/20 mirror, a 10/90 mirror), a second QWP layer 436 disposed at the eye-facing side of a transparent sub-layer layer 434, an advanced polarizing film (APF) layer 438**,** and an LP layer 440. In some embodiments, the refractive beam splitting convex lens 428 is implemented as a bi-convex lens having two opposed convex surfaces. To illustrate, the refractive beam-splitting convex lens 428 can be composed of two sub-layers 434, 444 formed of glass or plastic, with sub-layer 434 having a convex profile on the surface facing the pupil 414 and the sub-layer 444 having a conforming, complementary concave profile on the surface facing the world, and with a half-silvered or other partial mirror layer 442 disposed therebetween. The two sub-layers 434, 444, in some embodiments, have different refractive indexes.

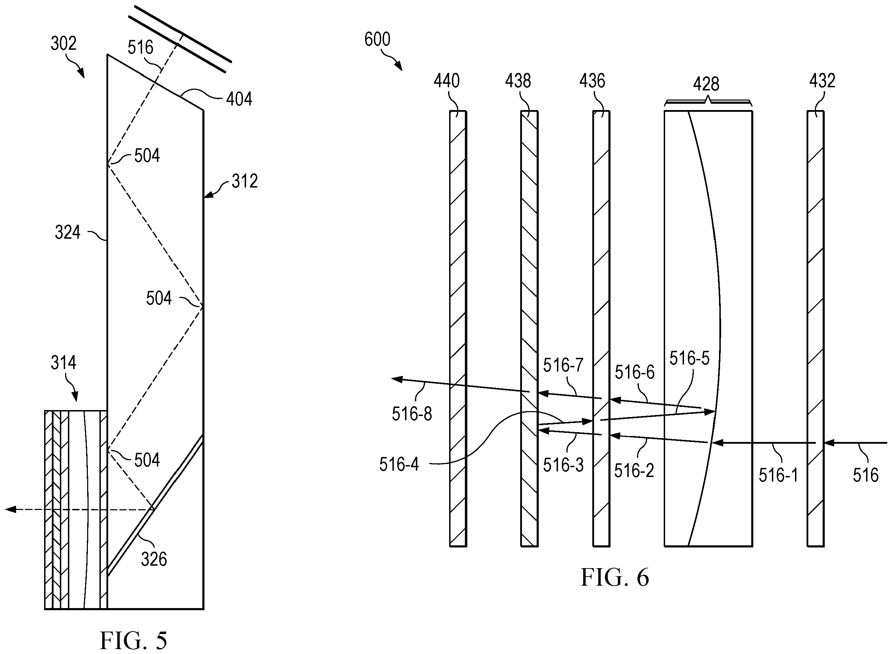

FIG. 5 illustrates an example optical path of a light ray 516 of the display light 316 as it travels within and out of the optical combiner 302 of FIG. 4. As illustrated, light ray 516 interacts with the LP layer 404, which in turn causes the light ray 516 to have a linear polarization state (e.g., x-linear polarized for purposes of this illustration), and the light ray 516 is conveyed through the waveguide prism 312 via the three illustrated TIRs 504. Upon encountering the outcoupling surface 326, the linear-polarized light ray 516 is reflected toward the eye-facing surface 324 and into the outcoupling interface 314.

FIG. 6 illustrates the optical path of the light ray 516 as it traverses the outcoupling interface 314 of FIG. 4. For purposes of illustration, an exploded cross-section view 600 of the outcoupling interface 314 with each layer separated from the adjacent layer(s) is depicted. For purposes of this example, the light ray 516 enters the outcoupling interface 314 from the waveguide prism 412 in an x-linear polarization state. The QWP layer 432 converts the linearly polarized light ray 516 into a light ray 516-1 having a first circular polarization. For example, the QWP layer 432 can convert the light ray 516 from a linear polarization in the y-direction to the light ray 516-1 that is right-hand circularly polarized (RCP). The refractive beam-splitting convex lens 428 transmits and refracts a portion of the circularly polarized light ray 516-1 as light ray 516-2, which is transmitted to the QWP layer 436, which converts the circularly polarized light ray 516-2 to a linearly polarized light ray 516-3. For example, the QWP layer 436 can convert the RCP light ray 516-2 into a light ray 516-3 that is linearly polarized in the x-direction. In this example, the APF layer 438 (e.g., a polarization-dependent beam splitter) reflects x-linear polarized light, and thus the light ray 516-3 is reflected by the AFP layer 438 as light ray 516-4 and converted to a circularly polarized light ray 516-5 as it passes through the QWP layer 436. For example, the light ray 516-5 can be converted to RCP. The light ray 516-5 is reflected by the refractive beam-splitting convex lens 428 as light ray 516-6, with this reflection introducing optical power as well as reversing or changing the circular polarization state of the light ray 516-5, e.g., reflection converts the light ray 516-5 to a left-hand circularly polarized (LCP) light ray 516-6. The QWP layer 436 converts the circularly polarized light ray 516-6 into a linearly polarized light ray 516-7. For example, the LCP state of the light ray 502-6 is converted into linear polarization of the light ray 516-7 in the y-direction. The AFP layer 438 and the LP layer 440 then transmit the resulting linearly polarized light ray 516-8 toward the user's eye.

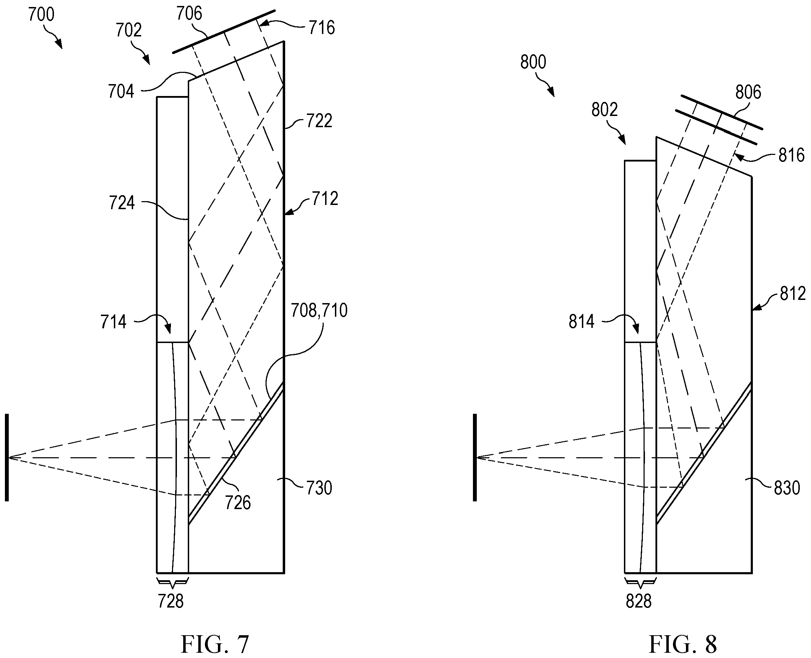

FIG. 7 illustrates a cross-section view 700 of an implementation of the optical combiner 302 (referred to herein as "optical combiner 702") at, for example, line A-A of the optical combiner 202 of FIG. 2. In the illustrated embodiment, display light 716 emitted by a display 706 is directed to an incoupling interface of a distal end of a waveguide prism 712 via an incoupling interface (omitted from FIG. 7 for purposes of clarity), wherein the incoupling interface has disposed thereon a linear polarizing (LP) layer 704 that serves to polarize the incoming display light 716 to a particular linear polarization state. The display light 716 then is conveyed to a proximal end of the waveguide prism 712 via two total internal reflections. An outcoupling surface 726 of waveguide prism 712, which is disposed at a non-zero angle (e.g., 45 degrees) relative to the world-facing surface 722 and the parallel eye-facing surface 724 of the waveguide prism 712 so as to reflect the display light 716 out of the waveguide prism 712 toward an outcoupling interface 714 disposed parallel to the eye-facing surface 724 at the proximal end of the waveguide prism 712. In at least one embodiment, both an APF layer 708 and an LP layer 710 are disposed at the outcoupling surface 726. The optical combiner 702 further can include a compensation prism 730 having a substantially similar index as the material of the waveguide prism 712.

The outcoupling interface 714 includes a pancake lens or similar optical element separated from the eye-facing surface 724 of the waveguide prism 712 and has one or more layers or stages of polarization-dependent films or structures that operate to both fold the optical path of the light incident on the world-facing side of the outcoupling interface, including a refractive beam-splitting convex lens 728 to provide optical power to the display light 716 while imparting little or no optical power to the real-world scene light transmitted through the waveguide prism 712 and compensation prism 730.

FIG. 8 illustrates a cross-section view 800 of an implementation of the optical combiner 302 (referred to herein as "optical combiner 802") at, for example, line A-A of the optical combiner 202 of FIG. 2. As with the other implementations described above, the optical combiner 802 includes an outcoupling interface 814 having a pancake lens or similar optical element with a plurality of layers or stages of polarization-dependent films or structures that operate to both fold the optical path of the light incident on the world-facing side of the outcoupling interface 814. The outcoupling interface 814 includes a refractive beam-splitting convex lens 828, as similarly described above, as well as to provide optical power to display light 816 conveyed from a display 806 at the distal end of a waveguide prism 812 using a single TIR while imparting little or no optical power to the real-world scene light transmitted through the waveguide prism 812 and compensation prism 830.

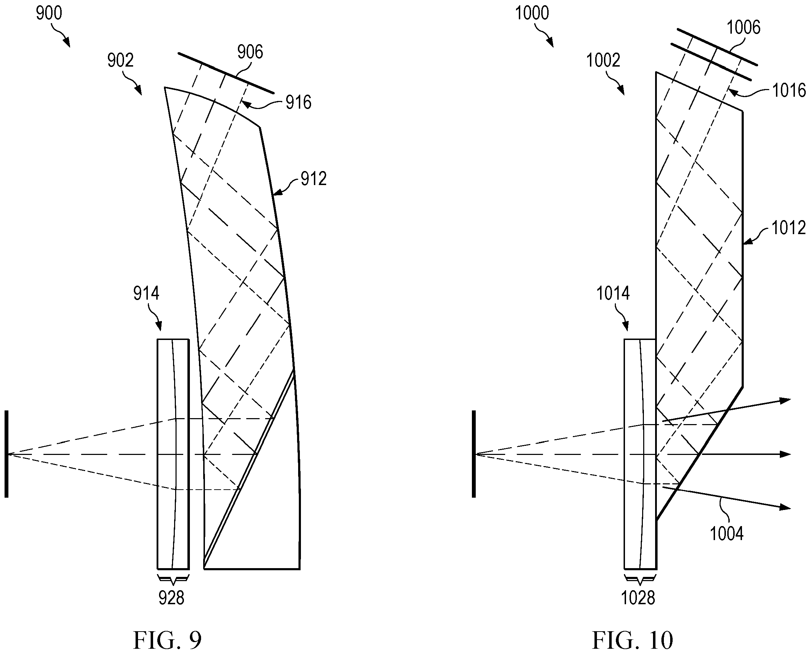

FIG. 9 illustrates a cross-section view 900 of an implementation of the optical combiner 302 (referred to herein as "optical combiner 902") at, for example, line A-A of the optical combiner 202 of FIG. 2. As with the other implementations described above, the optical combiner 902 includes an outcoupling interface 914 having a pancake lens or similar optical element with a plurality of layers or stages of polarization-dependent films or structures that operate to both fold the optical path of the light incident on the world-facing side of the outcoupling interface 914, including a refractive beam-splitting convex lens 928 as similarly described above, as well as to provide optical power to display light 916 conveyed from a display 906 at the distal end of a curved waveguide prism 912 using multiple TIRs, and with the curved waveguide prism 912 also imparting optical power to, or implementing a prescription for, the real-world scene light transmitted through the non-planar waveguide prism 912.

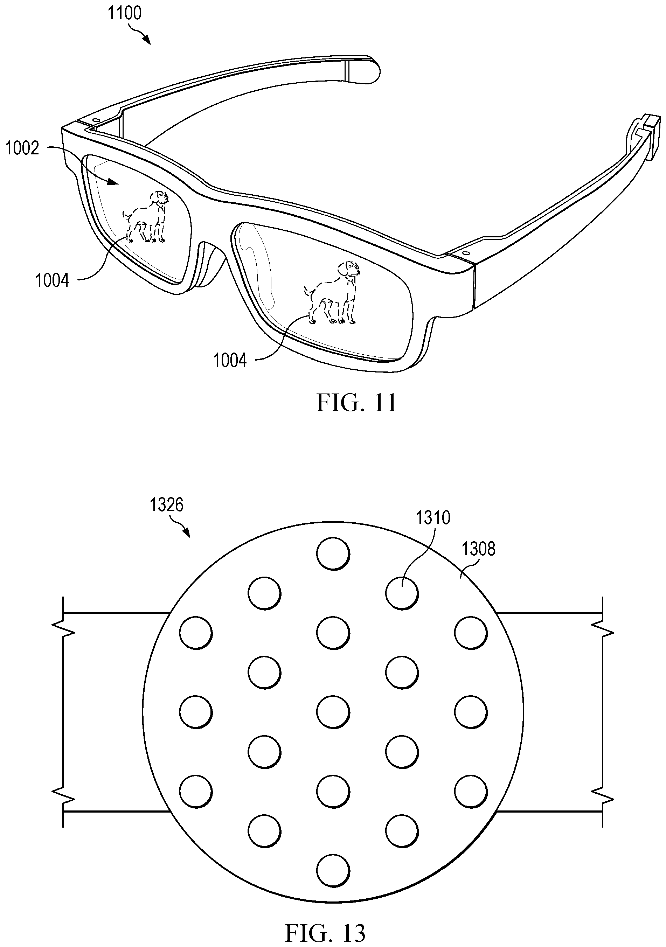

FIG. 10 illustrates a cross-section view 1000 of an optical combiner 1002 having an outcoupling interface 1014 with a refractive beam-splitting convex lens 1028, as represented in the embodiments described above, wherein some of the display light 1016 from display 1006 passing from the waveguide prism 1012 into the outcoupling interface 1014 is reflected back into, and through the waveguide prism 1012. This results in the emission of display light from the optical combiner 1002 as world-side light leakage 1004 that may be seen by observers looking at the user wearing a near-eye display system as the display imagery represented by the display light 1016 superimposed over the user's eyes. FIG. 11 illustrates an example near-eye display system 1100, including an optical combiner such as optical combiner 1002, exhibiting this distracting world-side light leakage 1004.

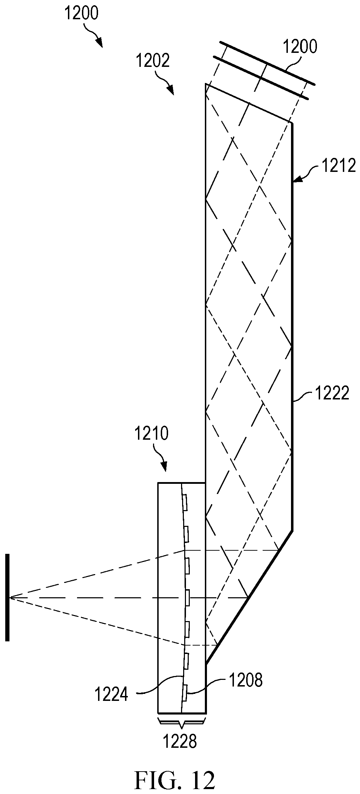

FIG. 12 illustrates a cross-section view 1200 of an implementation of an optical combiner 1202, to reduce the amount of world-side light leakage. The optical combiner 1202 includes an outcoupling interface 1214 with a refractive beam-splitting convex lens 1228 as similarly described above, the world-facing side 1222 of the refractive beam-splitting convex lens 1228 partially coated with a light-absorbing material 1208 (e.g., a black material) in a pattern that provides apertures 1224 between portions of the light-absorbing material 1208, thus forming an array of light-absorbing features 1210 in the refractive beam-splitting convex lens 1228. As such, any light incident in a non-aperture region of the eye-facing side of the lens 1228 will be substantially absorbed by the light-absorbing material 1208, and thus the amount of world-side light leakage exhibited by the optical combiner 1202 is significantly reduced.

FIG. 13 illustrates an example of an array of partial mirrors on a refractive beam-splitting convex lens 1326, such as outcoupling interface 314 of FIG. 3, having an array of light-absorbing features 1310 formed from circular pieces of light-absorbing material 1308 positioned on the world-facing side of the refractive beam-splitting convex lens 1326. Although an array of circular light-absorbing features 1310 is illustrated, other patterns can be implemented to provide for an array of light-absorbing features 1310 forming apertures with substantially uniform illumination across the lens 1326, such as a checkerboard aperture pattern, a striped aperture pattern, a concentric aperture pattern, and the like.

Note that not all of the activities or elements described above in the general description are required, that a portion of a specific activity or device may not be required, and that one or more further activities may be performed, or elements included, in addition to those described. Still further, the order in which activities are listed is not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. An optical combiner comprising:
a waveguide prism (312) configured to convey display light, from a display panel, from a proximal end of the waveguide prism to a distal end of the waveguide prism via total internal reflection; and
an outcoupling interface (314) disposed at an eye-facing surface (324) of the waveguide prism at the distal end of the waveguide prism, the outcoupling interface having a plurality of polarization-dependent layers including a refractive beam-splitting convex lens (428),
**characterized in that**
the plurality of polarization-dependent layers comprises:
a first quarter-wave plate -QWP- layer (432) disposed between the waveguide prism and the refractive beam-splitting convex lens;
a second QWP layer (436) disposed at an eye-facing surface of the refractive beam-splitting convex lens;
an advanced polarizing film -APF- layer (438) disposed on the second QWP layer; and
a linear polarizing layer (440) disposed on the APF layer.

2. The optical combiner of claim 1, further comprising:
an outcoupling surface disposed at the distal end of the waveguide prism, the outcoupling surface being configured to direct the display light out of the waveguide prism to the outcoupling interface.

3. The optical combiner of claim 2, wherein the outcoupling surface is oriented at a non-zero angle relative to a world-facing surface and parallel eye-facing surface of the waveguide prism.

4. The optical combiner of any of claims 1 to 3, further comprising:
a compensation prism coupled to the waveguide prism and having a substantially similar index of refraction as material of the waveguide prism.

5. The optical combiner of any of claims 1 to 4, further comprising:
a light-absorbing material disposed on a world-facing surface of the refractive beam-splitting convex lens, the light-absorbing material including a plurality of apertures to form an array of partial mirrors in the refractive beam-splitting convex lens.

6. A method, comprising:
directing display light (316) from a display panel (306) into a waveguide prism (312);
transmitting the display light within the waveguide prism via at least one total
internal reflection to an outcoupling surface (326); and reflecting the display light from the outcoupling surface to an outcoupling
interface (314) disposed at an eye-facing surface (324) of the waveguide prism, the outcoupling interface having a plurality of polarization-dependent layers including a refractive beam-splitting convex lens (428),
**characterized in that**
the plurality of polarization-dependent layers comprises:
a first quarter-wave plate -QWP- layer (432) disposed between the waveguide prism and the refractive beam-splitting convex lens;
a second QWP layer (436) disposed at an eye-facing surface of the refractive beam-splitting convex lens;
an advanced polarizing film -APF- layer (438) disposed on the second QWP layer; and
a linear polarizing layer (440) disposed on the APF layer.

7. The method of claim 6, further comprising:
transmitting the display light through the refractive beam-splitting convex lens to the APF layer;
reflecting the display light from the APF layer to a convex surface of the refractive beam-splitting convex lens; and
reflecting the display light from the convex surface and out of the outcoupling interface towards a user's eye.

8. The method of any of claims 6 or 7, wherein an array of light-absorbing features is disposed on a world-facing surface of the refractive beam-splitting convex lens.

9. A near-eye display system, comprising:
a display panel configured to project display light representative of visual content; and
an optical combiner as claimed in any of claims 1 to 5.

10. The near-eye display system of claim 9 , wherein the refractive beam-splitting convex lens comprises:
a first sub-layer and a second sub-layer.

11. The near-eye display system of claim 10, wherein the first sub-layer has a convex profile on an eye-facing surface and the second sub-layer has a concave profile, which is complementary to the convex profile, on a world-facing surface.

12. The near-eye display system of claim 10, wherein the refractive beam-splitting convex lens further comprises:
a partial mirror layer disposed between the first sub-layer and the second sub-layer.

13. The near-eye display system of any of claims 9 to 12, wherein the optical combiner further comprises:
a compensation prism coupled to the waveguide prism and having a substantially similar index of refraction as the material of the waveguide prism.

14. The near-eye display system of any of claims 9 to 12, wherein the outcoupling interface includes an array of light-absorbing features to prevent world-side light leakage from the optical combiner.

15. The near-eye display system of claim 14, wherein the array of light-absorbing features is disposed on a world-facing surface of the refractive beam-splitting convex lens, the light-absorbing features including a plurality of apertures to form an array of partial mirrors in the refractive beam-splitting convex lens.

## Patentansprüche

1. Optischer Kombinierer, umfassend:
ein Wellenleiterprisma (312), das dazu konfiguriert ist, Anzeigelicht von einem Anzeigefeld von einem proximalen Ende des Wellenleiterprismas zu einem distalen Ende des Wellenleiterprismas über innere Totalreflexion zu befördern; und
eine Auskoppelschnittstelle (314), die an einer dem Auge zugewandten Fläche (324) des Wellenleiterprismas an dem distalen Ende des Wellenleiterprismas angeordnet ist, wobei die Auskoppelschnittstelle eine Vielzahl von polarisationsabhängigen Schichten beinhaltet, die eine konvexe Linse (428) mit refraktiver Strahlenteilung beinhaltet,
**dadurch gekennzeichnet, dass**
die Vielzahl von polarisationsabhängigen Schichten Folgendes umfasst:
eine erste Viertelwellenplatte- (quarter-wave plate, QWP)Schicht (432), die zwischen dem Wellenleiterprisma und der konvexen Linse mit refraktiver Strahlenteilung angeordnet ist;
eine zweite QWP-Schicht (436), die auf einer dem Auge zugewandten Fläche der konvexen Linse mit refraktiver Strahlenteilung angeordnet ist;
eine fortschrittliche polarisierende Film-(advanced polarizing film, APF-)Schicht (438), die auf der zweiten QWP-Schicht angeordnet ist; und
eine linear polarisierende Schicht (440), die auf der APF-Schicht angeordnet ist.

2. Optischer Kombinierer nach Anspruch 1, ferner umfassend:
eine Auskoppelfläche, die an dem distalen Ende des Wellenleiterprismas angeordnet ist, wobei die Auskoppelfläche dazu konfiguriert ist, das Anzeigelicht aus dem Wellenleiterprisma zu der Auskoppelschnittstelle zu richten.

3. Optischer Kombinierer nach Anspruch 2, wobei die Auskoppelfläche in einem Nichtnull-Winkel relativ zu einer der Welt zugewandten Fläche und einer parallelen, dem Auge zugewandten Fläche des Wellenleiterprismas ausgerichtet ist.

4. Optischer Kombinierer nach einem der Ansprüche 1 bis 3, ferner umfassend:
ein Ausgleichsprisma, das mit dem Wellenleiterprisma gekoppelt ist und einen im Wesentlichen ähnlichen Brechungsindex aufweist wie Material des Wellenleiterprismas.

5. Optischer Kombinierer nach einem der Ansprüche 1 bis 4, ferner umfassend:
ein lichtabsorbierendes Material, das auf einer der Welt zugewandten Fläche der konvexen Linse mit refraktiver Strahlenteilung angeordnet ist, wobei das lichtabsorbierende Material eine Vielzahl von Öffnungen beinhaltet, um eine Anordnung von Teilspiegeln in der konvexen Linse mit refraktiver Strahlenteilung zu bilden.

6. Verfahren, umfassend:
Richten von Anzeigelicht (316) von einem Anzeigefeld (306) in ein Wellenleiterprisma (312);
Übertragen des Anzeigelichts innerhalb des Wellenleiterprismas über mindestens eine interne Totalreflexion auf eine Auskoppelfläche (326); und
Reflektieren des Anzeigelichts von der Auskoppelfläche zu einer Auskoppelschnittstelle (314), die an einer dem Auge zugewandten Fläche (324) des Wellenleiterprismas angeordnet ist, wobei die Auskoppelschnittstelle eine Vielzahl von polarisationsabhängigen Schichten aufweist, einschließlich einer konvexen Linse (428) mit refraktivem Strahlenteiler,
**dadurch gekennzeichnet, dass**
die Vielzahl von polarisationsabhängigen Schichten Folgendes umfasst:
eine erste Viertelwellenplatte- (quarter-wave plate, QWP)Schicht (432), die zwischen dem Wellenleiterprisma und der konvexen Linse mit refraktiver Strahlenteilung angeordnet ist;
eine zweite QWP-Schicht (436), die auf einer dem Auge zugewandten Fläche der konvexen Linse mit refraktiver Strahlenteilung angeordnet ist;
eine fortschrittliche polarisierende Film-(advanced polarizing film, APF-)Schicht (438), die auf der zweiten QWP-Schicht angeordnet ist; und
eine linear polarisierende Schicht (440), die auf der APF-Schicht angeordnet ist.

7. Verfahren nach Anspruch 6, ferner umfassend:
Übertragen des Anzeigelichts durch die konvexe Linse mit refraktiver Strahlenteilung auf die APF-Schicht;
Reflektieren des Anzeigelichts von der APF-Schicht auf eine konvexe Fläche der konvexen Linse mit refraktiver Strahlenteilung; und
Reflektieren des Anzeigelichts von der konvexen Fläche und aus der Auskoppelschnittstelle in Richtung des Auges des Benutzers.

8. Verfahren nach einem der Ansprüche 6 oder 7, wobei eine Anordnung von lichtabsorbierenden Merkmalen auf einer der Welt zugewandten Fläche der konvexen Linse mit refraktiver Strahlenteilung angeordnet ist.

9. Augennahes Anzeigesystem, umfassend:
ein Anzeigefeld, das dazu konfiguriert ist, Anzeigelicht zu projizieren, das visuellen Inhalt darstellt; und
einen optischen Kombinierer nach einem der Ansprüche 1 bis 5.

10. Augennahes Anzeigesystem nach Anspruch 9, wobei die konvexe Linse mit refraktiver Strahlenteilung Folgendes umfasst:
eine erste Teilschicht und eine zweite Teilschicht.

11. Augennahes Anzeigesystem nach Anspruch 10, wobei die erste Teilschicht ein konvexes Profil auf einer dem Auge zugewandten Fläche aufweist und die zweite Teilschicht ein konkaves Profil, das komplementär zu dem konvexen Profil ist, auf einer der Welt zugewandten Fläche aufweist.

12. Augennahes Anzeigesystem nach Anspruch 10, wobei die konvexe Linse mit refraktiver Strahlenteilung ferner Folgendes umfasst: eine partielle Spiegelschicht, die zwischen der ersten Teilschicht und der zweiten Teilschicht angeordnet ist.

13. Augennahes Anzeigesystem nach einem der Ansprüche 9 bis 12, wobei der optische Kombinierer ferner Folgendes umfasst:
ein Ausgleichsprisma, das mit dem Wellenleiterprisma gekoppelt ist und einen im Wesentlichen ähnlichen Brechungsindex aufweist wie das Material des Wellenleiterprismas.

14. Augennahes Anzeigesystem nach einem der Ansprüche 9 bis 12, wobei die Auskopplungsschnittstelle eine Anordnung von lichtabsorbierenden Merkmalen beinhaltet, um einen weltseitigen Lichtaustritt aus dem optischen Kombinierer zu verhindern.

15. Augennahes Anzeigesystem nach Anspruch 14, wobei die Anordnung lichtabsorbierender Merkmale auf einer der Welt zugewandten Fläche der konvexen Linse mit refraktiver Strahlenteilung angeordnet ist und die lichtabsorbierenden Merkmale eine Vielzahl von Öffnungen beinhalten, um eine Anordnung von Teilspiegeln in der konvexen Linse mit refraktiver Strahlenteilung zu bilden.

## Revendications

1. Combinateur optique comprenant :
un prisme de guide d'ondes (312) configuré pour acheminer une lumière d'affichage, provenant d'un panneau d'affichage, d'une extrémité proximale du prisme de guide d'ondes à une extrémité distale du prisme de guide d'ondes par l'intermédiaire d'une réflexion interne totale ; et
une interface de découplage (314) disposée au niveau d'une surface tournée vers l'œil (324) du prisme de guide d'ondes au niveau de l'extrémité distale du prisme de guide d'ondes, l'interface de découplage présentant une pluralité de couches dépendant de la polarisation comportant une lentille convexe de division de faisceau de réfraction (428),
**caractérisé en ce que**
la pluralité de couches dépendant de la polarisation comprend :
une première couche de plaque de quart d'onde, QWP, (432) disposée entre le prisme de guide d'ondes et la lentille convexe de division de faisceau de réfraction ;
une seconde couche QWP (436) disposée au niveau d'une surface tournée vers l'œil de la lentille convexe de division de faisceau de réfraction ;
une couche de film polarisant avancé, APF, (438) disposée sur la seconde couche QWP ; et
une couche polarisante linéaire (440) disposée sur la couche APF.

2. Combinateur optique selon la revendication 1, comprenant également :
une surface de découplage disposée au niveau de l'extrémité distale du prisme de guide d'ondes, la surface de découplage étant configurée pour diriger la lumière d'affichage en dehors du prisme de guide d'ondes vers l'interface de découplage.

3. Combinateur optique selon la revendication 2, dans lequel la surface de découplage est orientée à un angle non nul par rapport à une surface tournée vers le monde et à une surface parallèle tournée vers l'œil du prisme de guide d'ondes.

4. Combinateur optique selon l'une quelconque des revendications 1 à 3, comprenant également :
un prisme de compensation couplé au prisme de guide d'ondes et présentant un indice de réfraction sensiblement similaire à celui d'un matériau du prisme de guide d'ondes.

5. Combinateur optique selon l'une quelconque des revendications 1 à 4, comprenant également :
un matériau absorbant la lumière disposé sur une surface tournée vers le monde de la lentille convexe de division de faisceau de réfraction, le matériau absorbant la lumière comportant une pluralité d'ouvertures pour former un réseau de miroirs partiels dans la lentille convexe de division de faisceau de réfraction.

6. Procédé, comprenant :
la direction de lumière d'affichage (316) provenant d'un panneau d'affichage (306) dans un prisme de guide d'ondes (312) ;
la transmission de la lumière d'affichage à l'intérieur du prisme de guide d'ondes par l'intermédiaire d'au moins une réflexion interne totale vers une surface de découplage (326) ; et
la réflexion de la lumière d'affichage depuis la surface de découplage vers une interface de découplage (314) disposée au niveau d'une surface tournée vers l'œil (324) du prisme de guide d'ondes, l'interface de découplage présentant une pluralité de couches dépendant de la polarisation comportant une lentille convexe de division de faisceau de réfraction (428),
**caractérisé en ce que**
la pluralité de couches dépendant de la polarisation comprend :
une première couche de plaque de quart d'onde, QWP, (432) disposée entre le prisme de guide d'ondes et la lentille convexe de division de faisceau de réfraction ;
une seconde couche QWP (436) disposée au niveau d'une surface tournée vers l'œil de la lentille convexe de division de faisceau de réfraction ;
une couche de film polarisant avancé, APF, (438) disposée sur la seconde couche QWP ; et
une couche polarisante linéaire (440) disposée sur la couche APF.

7. Procédé selon la revendication 6, comprenant également :
la transmission de la lumière d'affichage à travers la lentille convexe de division de faisceau de réfraction à la couche APF ;
la réflexion de la lumière d'affichage depuis la couche APF vers une surface convexe de la lentille convexe de division de faisceau de réfraction ; et
la réflexion de la lumière de l'affichage depuis la surface convexe et en dehors de l'interface de découplage vers l'œil de l'utilisateur.

8. Procédé selon l'une quelconque des revendications 6 ou 7, dans lequel un réseau de caractéristiques absorbant la lumière est disposé sur une surface tournée vers le monde de la lentille convexe de division de faisceau de réfraction.

9. Système d'affichage proche de l'œil, comprenant :
un panneau d'affichage configuré pour projeter une lumière d'affichage représentative du contenu visuel ; et
un combinateur optique selon l'une quelconque des revendications 1 à 5.

10. Système d'affichage proche de l'œil selon la revendication 9, dans lequel la lentille convexe de division de faisceau de réfraction comprend :
une première sous-couche et une seconde sous-couche.

11. Système d'affichage proche de l'œil selon la revendication 10, dans lequel la première sous-couche présente un profil convexe sur une surface tournée vers l'œil et la seconde sous-couche présente un profil concave, qui est complémentaire du profil convexe, sur une surface tournée vers le monde.

12. Système d'affichage proche de l'œil selon la revendication 10, dans lequel la lentille convexe de division de faisceau de réfraction comprend également :
une couche de miroir partiel disposée entre la première sous-couche et la seconde sous-couche.

13. Système d'affichage proche de l'œil selon l'une quelconque des revendications 9 à 12, dans lequel le combinateur optique comprend également :
un prisme de compensation couplé au prisme de guide d'ondes et présentant un indice de réfraction sensiblement similaire à celui du matériau du prisme de guide d'ondes.

14. Système d'affichage proche de l'œil selon l'une quelconque des revendications 9 à 12, dans lequel l'interface de couplage de sortie comporte un réseau de caractéristiques d'absorption de lumière pour empêcher une fuite de lumière côté monde provenant du combinateur optique.

15. Système d'affichage proche de l'œil selon la revendication 14, dans lequel le réseau de caractéristiques absorbant la lumière est disposé sur une surface tournée vers le monde de la lentille convexe de division de faisceau de réfraction, les caractéristiques absorbant la lumière comportant une pluralité d'ouvertures pour former un réseau de miroirs partiels dans la lentille convexe de division de faisceau de réfraction.
